# EUROPÄISCHE PATENTSCHRIFT

(11) **EP 0 630 282 B1**
(45) Veröffentlichungstag und Bekanntmachung des Hinweises auf die Patenterteilung: **11.09.1996**
(21) Anmeldenummer: 93905188.4
(22) Anmeldetag: 12.03.1993
(51) Int. Cl.: B01D 39/16

(54) **SELBSTTRAGENDES, BESCHICHTETES FILTERELEMENT**
SELF-SUPPORTING COATED FILTER ELEMENT
ELEMENT FILTRANT ENDUIT AUTOPORTEUR

(30) Priorität: 14.03.1992 DE 4208195
(43) Veröffentlichungstag der Anmeldung: 28.12.1994
(73) Patentinhaber: MESROC GmbH Vertrieb technischer Produkte, D-90461 Nürnberg (DE)
(72) Erfinder: RAUSCH, Walter, D-8503 Altdorf (DE); MERTEN, Fritz, D-8501 Schwarzenbruck (DE); PFEFFER, Michael, D-8510 Fürth (DE)
(74) Vertreter: Merten, Fritz
(86) Internationale Anmeldenummer: DE9300234
(87) Internationale Veröffentlichungsnummer: WO9318840

(56) Entgegenhaltungen:
- DE-A- 3 024 324
- DE-B- 1 176 850
- DE-U- 9 012 319
- KUNSTSTOFFE Bd. 82, Nr. 4, April 1992, MUNCHEN DE Seiten 338 - 341 , XP265425 S. STRAUSS "Filtern mit gesintertem ultrahochmolekularem Polyethylen"
- DATABASE WPI Section Ch, Week 7606, Derwent Publications Ltd., London, GB; Class A04, AN 76-10725X
- TECHNISCHE MITTEILUNGEN Bd. 85, Nr. 2, Juli 1992, DE Seiten 100 - 104 S. STRAUSS 'Gesinterte Kunststoff-Formteile für die Fest-/Flüssig-Filtration'

## Beschreibung

Die Erfindung betrifft ein selbsttragendes, beschichtetes Filterelement zum Filtern von Stäuben oder Aerosolen aus der Umgebungsluft oder Schwebstoffen aus einer Flüssigkeit mit den Merkmalen des Oberbegriffs des Anspruchs 1.

Derartige Filter sind lange bekannt. Das DE-U-19 67 737 zeigt beispielsweise ein Filterelement, wie eine Filterplatte oder dergleichen, bestehend aus einem Tragkörper und einer mit diesem verbundenen Filterschicht. Hier wird vorgeschlagen, den Tragkörper aus porösen Kunststoffkörnern zu sintern und diesen als Vorfilter zu dem eigentlichen Filterelement zu benutzen. Nachteilig ist hier, daß dadurch der Tragkörper von der belasteten Umgebungsluft zuerst durchströmt wird und sich Staube oder Aerosole in dem Tragkörper absetzen und diesen mit der Zeit verstopfen. Eine Reinigung des Tragkörpers ist kaum möglich.

Die DE-A-30 24 324 schlägt vor, einen Tragkörper aus niedermolekularem Polyethylen durch Aufsintern mit einer Filterschicht aus hochmolekularem Polyethylen zu versehen. Bei diesem Filterelement erscheint problematisch, daß die thermische Formbeständigkeit von niedermolekularem und hochmolekularem Polyethylen relativ beieinander liegt und gleichzeitig niedrig ist (ca. 35° und ca. 45°), so daß sowohl die Porosität des Tragkörpers unbefriedigend ist, als auch die Filterschicht aus hochmolekularem Polyethylen bei den erforderlichen Sintertemperaturen bereits zu Laufen anfing, so daß ein definiertes Porenverhältnis nicht zu erzielen ist.

Bekannt ist ferner aus der DE-C-34 13 213 ein Filterelement, dessen Tragkörper aus einem gesinterten Kunststoff, d.h. Polyethylen und die Filterschicht aus einer feinporigen Schicht besteht, deren Porengröße um den Faktor 10 kleiner ist, als die des Tragkörpers. Als Material für diese Schicht wird ein Polytetrafluorethylen eingesetzt. Hier ist die Filterschicht der belasteten Umgebungsluft zugewandt. Zwar kann der Tragkörper infolge Rückspülung oder Gegenblasen einerseits und Abhalten der Schmutzpartikel andererseits nicht verstopfen und die Filterschicht läßt sich gut reinigen, indessen ist es nachteilig daß hier einerseits Polytetrafluorethylen ein vergleichsweise sehr teures Material für die Filterschicht ist und daß andererseits durch das Verhältnis der Porengrößen zueinander entweder der Tragkörper zu grob wird und leichter beschädigt werden kann, oder aber die Filterschicht derart kleine Poren aufweist, daß der Druckverlust so hoch wird, daß sehr aufwendige Gebläse oder Pumpen zum Fördern der Umgebungsluft oder Flüssigkeit eingesetzt werden müssen.

Aufgabe der vorliegenden Erfindung ist es daher, ein Filterelement zu schaffen, das nicht leicht verstopft, das gut gereinigt werden kann, das aus einem preiswerten Material gefertigt werden kann, das eine hohe Verschleißfestigkeit aufweist und das keine aufwendigen Gebläse oder Ansaugpumpen erforderlich macht.

Diese Aufgabe wird mit den im kennzeichnenden Teil des Anspruchs 1 genannten Merkmalen gelöst. Fortbildungen und besondere Ausführungen der Erfindung sind in den Unteransprüchen umfaßt.

Überraschend hat sich erwiesen, daß es möglich ist, die Filterschicht aus ultrahochmolekularem Polyethylen zu fertigen. Aufgeklebtes oder aufgesintertes Feingranulat aus ultrahochmolekularem Polyethylen ermöglicht eine Porengröße für die Filterschicht von 0 bis 12 µm, welche auf einen Tragkörper aus gesintertem, etwas gröberen Granulat von Polyethylen mit einer Porengröße von 10 bis 34 µm aufgetragen wird. Die mittleren Porengrößen verhalten sich erfindungsgemäß wie zwischen 1:3 und 1:6. Der größte Anteil der Poren der Filterschicht liegt vorteilhafterweise bei 4 µm, der größte Anteil der Poren bei dem Tragkörper liegt vorteilhafterweise bei 12 µm. Durch diesen Aufbau wird ein Filterelement geschaffen, das einen gut tragenden, verschleißfesten Tragkörper aufweist, und dessen Porengröße so groß ist, daß sie kaum einen zusätzlichen Druckverlust mit sich bringt. Die Filterschicht, aus dem gleichen Material wie der Tragkörper, läßt sich überraschenderweise ebenso gut abreinigen, z.B. durch Gegenblasen oder Dampfstrahlen, wie das teurere Polytretrafluorethylen.

Die Filterschicht aus einem ultrahochmolekularen Polyethylen wird als Emulsion und mit einem Haftvermittler vermischt auf den Tragkörper aufgebracht und anschließend einem Trocknungsvorgang unterworfen. Der Tragkörper besteht hingegen vorteilhafterweise aus einem gesinterten Gemisch aus 1/3 niedermolekularem und 2/3 ultrahochmolekularem Polyethylen.

Durch die Verwendung von Polyethylen für den Tragkörper und die Filterschicht wird ein sehr preiswertes Filterelement geschaffen. Es ist überdies auch möglich, für den Tragkörper auch ein durch Recycling wiedergewonnenes, auf die passende Korngröße granuliertes Polyethylen zu verwenden. Hierdurch können weitere Kosten gespart werden. Durch die mittlere Porengröße von ca. 20 µm und den größten Porenanteil bei ca. 12 µm können in dem wiederverwerteten Polyehtylen für den Tragkörper auch die bei Recyclingmaterial zu erwartenden Anteile an anderen Kunststoffen von bis zu 10% enthalten sein, ohne die Festigkeit des Tragkörpers und die Haftfähigkeit der Filterschicht wesentlich zu beeinträchtigen.

## Patentansprüche

1. Selbsttragendes, beschichtetes Filterelement zum Filtern von Stäuben oder Aerosolen aus der Umgebungsluft oder Schwebstoffen aus einer Flüssigkeit, bestehend aus einem porösen Tragkörper,
sowie einer der belasteten Umgebungsluft oder Flüssigkeit zugewandten, auf den Tragkörper aufgetragenen porösen Filterschicht,
wobei der Tragkörper aus einem gesinterten Kunststoff besteht,
und die Filterschicht ebenfalls aus diesem Kunststoff besteht und auf diesem haftend aufgetragen ist,
wobei der Kunststoff Polyethylen ist,
**dadurch gekennzeichnet**,
daß die Filterschicht aus ultrahochmolekularem Polyethylen besteht.
und daß die mittlere Porengröße der Mikroporen aufweisenden Filterschicht sich zu der mittleren durch den Sintervorgang gebildeten Porengröße der Makroporen des Tragkörpers sich wie 1:3 bis 1:6 verhält.

2. Selbsttragendes, beschichtetes Filterelement nach Anspruch 1,
**dadurch gekennzeichnet**,
daß der Tragkörper aus einem Gemisch aus 1/3 niedermolekularem und 2/3 ultrahochmolekularem Polyethylen besteht.

3. Selbsttragendes, beschichtetes Filterelement nach Anspruch 2,
**dadurch gekennzeichnet**,
daß der Tragkörper aus einem durch Recycling wiedergewonnenen granulierten und anschließend gesinterten Polyethylen besteht.

## Claims

1. A self-supporting, coated filter element for filtering particulates or aerosols from the ambient air or suspended solids from a liquid, comprising a porous supporting body, and also a porous filter layer directed towards the contaminated ambient air or liquid and applied onto the supporting body, wherein the supporting body is made of a sintered plastics material, and the filter layer is similarly made of this plastics material and is applied adhesively thereto, wherein the plastics material is polyethylene, characterised in that the filter layer is made of ultra-high molecular polyethylene, and in that the ratio of the average pore size of the micropores of the filter layer to the average pore size of the macropores of the supporting body formed by the sintering process is 1:3 to 1:6.

2. A self-supporting, coated filter element according to Claim 1, characterised in that the supporting body is made of a mixture of 1/3 low molecular and 2/3 ultra-high molecular polyethylene.

3. A self-supporting, coated filter element according to Claim 2, characterised in that the supporting body is made of a granulated and then sintered polyethylene which is recovered by recycling.

## Revendications

1. Elément filtrant enduit autoporteur, pour filtrer des poussières ou des aérosols dans l'air ambiant ou des matières en suspension dans un liquide, se composant d'un corps porteur ainsi que d'une couche filtrante poreuse appliquée sur le corps porteur et tournée vers l'air ambiant ou le liquide chargé, le corps porteur étant fabriqué dans un matériau plastique fritté, et la couche filtrante étant elle aussi fabriquée dans ce matériau plastique et appliquée sur ce dernier en y adhérant, le matériau plastique susdit étant du polyéthylène, ledit élément filtrant étant caractérisé en ce que la couche filtrante se compose de polyéthylène de poids moléculaire très élevé, et en ce que la grosseur moyenne des pores de la couche filtrante présentant des micropores se situe dans un rapport de 1:3 à 1:6 avec la grosseur moyenne des macropores du corps porteur produite par l'opération de frittage.

2. Elément filtrant enduit autoporteur suivant la revendication 1, caractérisé en ce que le corps porteur se compose d'un mélange d'1/3 de polyéthylène de faible poids moléculaire et de 2/3 de polyéthylène de poids moléculaire très élevé.

3. Elément filtrant enduit autoporteur suivant la revendication 2, caractérisé en ce que le corps porteur se compose de polyéthylène granulé récupéré par recyclage et puis fritté.
